# EUROPÄISCHE PATENTSCHRIFT

(11) **EP 1 256 936 B1**
(45) Veröffentlichungstag und Bekanntmachung des Hinweises auf die Patenterteilung: **14.02.2007**
(21) Anmeldenummer: 02100462.7
(22) Anmeldetag: 08.05.2002
(51) Int. Cl.: G10L 15/06

(54) **Verfahren zum Training oder zur Adaption eines Spracherkenners**
Method for the training or the adaptation of a speech recognizer
Procédé pour l'entraînement ou l'adaptation d'un système de reconnaissance de la parole

(30) Priorität: 11.05.2001 DE 10122828
(43) Veröffentlichungstag der Anmeldung: 13.11.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Steinbiss , Volker Dr., 52066, Aachen (DE); Eisele, Thomas Dr., 52066, Aachen (DE)
(74) Vertreter: Volmer, Georg

(56) Entgegenhaltungen:
- EP-A- 1 011 094
- EP-A- 1 022 724
- US-A- 5 617 486
- US-B1- 6 374 221
- TAKAHASHI J ET AL: "Interactive voice technology development for telecommunications applications" SPEECH COMMUNICATION, ELSEVIER SCIENCE PUBLISHERS, AMSTERDAM, NL, Bd. 17, Nr. 3, 1. November 1995 (1995-11-01), Seiten 287-301, XP004001043 ISSN: 0167-6393

## Beschreibung

Die Erfindung betrifft ein Verfahren zum Training oder zur Adaption eines Spracherkenners, der zur Einwirkung auf Funktionen eines elektrischen Geräts dient.

Insbesondere ist das elektrische Gerät ein Mobilfunkendgerät, bei dem dem Einwirken auf Gerätefunktionen die Durchführung einer Sprachwahl einspricht, bei der durch eine Spracheingabe die Anwahl eines anderen Teilnehmers bewirkt wird. Bei der Anwendung in einem Kraftfahrzeug, bei der üblicherweise zur weiteren Unterstützung eines Benutzers eine Freisprecheinrichtung vorgesehen ist, wird der Bedienungskomfort für einen Benutzer verbessert, der zur Auslösung einer Anwahl eines anderen Teilnehmers nicht mehr eine Tastatureingabe durchführen muss. Weitere Einsatzgebiete der Erfindung sind beispielsweise die Steuerung von Konsumelektronik-Geräten wie Fernseher, Videorecorder, Hifi-Musikanlagen, Küchengeräten oder anderen Geräten mit Sprachsteuerung, bei denen auf die verschiedenen Gerätefunktionen mittels Sprache eingewirkt werden kann, z B. Lautstärkeregelung, Wahl eines Fernseh- oder Radioprogramms oder Einstellung der Motordrehzahl eines Küchengerätes.

Ein Spracherkenner kann trainiert und/oder adaptiert werden, indem akustische Modelle und zugehörige Parameter auf neue Worte, den Benutzer und gegebenenfalls auf Umgebungs, geräusche oder die jeweilige Mikrofonposition angepasst werden. Dabei werden entweder dem Lexikon des Spracherkenners, der das durch akustische Modelle repräsentierte Vokabular des Spracherkenners enthält, neue Einträge hinzugefügt oder es werden bereits vorhandene Vokabulareinträge angepasst. Bei Spracherkennern, die Hidden Markov Modelle (HMM) verwenden, werden dabei Ubergangswahrscheinlichkeiten und Ausgabeverteilungen von Hidden Markov Modellen eingestellt.

Beim Training wird der Spracherkenner auf Spracheingaben eines Benutzers angepasst, die dieser bisher noch nicht getätigt hat. Dies kann vor der Erstverwendung des Spracherkenners durch einen Benutzer oder auch später nach der Inbetriebnahme für noch nicht getätigte Spracheingaben geschehen Es kann auch unter Verwendung älterer Sprachdaten ein Neutraining durchgeführt werden. Es sind verschiedene Varianten zur Durchführung eines Trainings bekannt, bei denen z.B. ein Schätzen von Verteilungsgemischen bei fester HMM-Topologie oder auch eine Veränderung der Anzahl oder der Verschaltung der HMM-Zustände erfolgt.

Bei einer Adaption des Spracherkenners werden voreingestellte Parameter des Spracherkenners angepasst und optimiert, wobei die Voreinstellung der Parameter bei einem von einem Benutzer durchgeführten Training oder gegebenenfalls zusätzlich auch aufgrund schon getätigter Adaptionsvorgänge erfolgt ist; die Voreinstellung der Parameter kann aber auch benutzerunabhängig erfolgen. Bei der akustischen Adaption auf den Benutzer wird ein System mit Hilfe von gesammelten Sprachdaten spezifisch für diesen Benutzer verbessert, d.h. die Fehlerrate soll im Laufe der Adaption geringer werden. Eine Vielzahl von Adaptions verfahren ist bekannt, z.B. MAP (maximum a posteriori), MLLR (maximum likelihood linear regression), Eigenvoices (dieses Verfahren wird derzeit nur bei aufwändig gestalteten Systemen genutzt). Auch andere Formen der Adaption als die akustische Adaption sind möglich; so kann man etwa durch Aufstellen von Benutzungsstatistiken (z B. durch Auswertung, wie oft ein Kommando oder eine Telefonnummer gesprochen wird und in welchen Kombinationen diese gesprochen werden) und eine Auswertung dieser Daten die Leistung eines Systems verbessern.

Aus der US 5,805,672 ist es bekannt, in einem Kraftfahrzeug mittels eines einen Spracherkenner aufweisenden Zusatzgerätes eine Sprachwahlfunktion für ein Mobilfunkendgerät zur Verfügung zu stellen Bei dem Einsatz im Kraftfahrzeug wird eine Freisprechvorrichtung verwendet. Falls eine Sprachwahl erfolgen soll, muss vorher der Sprachwahlmodus aktiviert werden. Das Zusatzgerät erkennt dann mittels des Spracherkenners trainierte Worte in einer Spracheingabe und ordnet einem erkannten Wort eine zugehörige Telefonnummer zu und der entsprechende Teilnehmer wird automatisch angewählt. Es ist ein Trainingsmodus vorgesehen, bei dessen Aktivierung der Spracherkenner trainiert werden kann. Der Trainingsmodus wird durch Tastendruck aktiviert. Beim Training wird ein Benutzer aufgefordert, einen Namen zweimal zu sagen und die zugehörige Telefonnummer einzugeben. Danach drückt der Benutzer eine Bestätigungstaste, woraufhin das System das Spracherkennungsergebnis (den erkannten Namen) und die zugehörige Telefonnummer mittels Sprachausgabe an den Benutzer ausgibt. Danach kann der Benutzer mit dem Training bzgl. eines weiteren Namens fortfahren.

Aus der WO 00/14729 ist Mobilfunkendgerät mit einem Spracherkenner und Sprachwahlfunktion bekannt. Auch hier ist ein Trainingsmodus vorgesehen, der durch Betätigung eines Schalters aktiviert wird. Während des Trainingsmodus wird ein konventionelles Training durchgeführt, bei dem das Vokabular des Spracherkenners durch Eingabe neuer Wörter erweitert wird.

Aus EP 1 011 094 A1 ist ein Verfahren zur Durchführung einer unbeaufsichtigten und/oder on-line Adaption eines automatischen Spracherkennungssystems bekannt. Um eine Adaption des automatischen Spracherkenners bei falsch erkannten Worten zu verhindern, wird vorgeschlagen, Zuverlässigkeitsmaße zu verwenden oder die Reaktion des Benutzers zu interpretieren, um zu entscheiden, ob ein erkanntes Phonem, mehrere Phoneme, ein Wort, mehrere Worte oder eine gesamte Äußerung zur Adaption des sprecherunabhängigen Models zu einem sprecherangepassten Model verwendet werden soll oder nicht. Bei einer möglichen Ausführungsform wird die Dialoghistorie betrachtet, um zu entscheiden, ob eine Sprachäußerung zur Adaption verwendet werden soll. Dazu wird nach einer Erkennung einer Sprachäußerung durch den Benutzer in einem nächsten Verfahrensschritt das Erkennungsergebnis interpretiert. Dabei wird beurteilt, ob der Benutzer mit der Reaktion des Systems auf die vorherige Sprachäußerung zufrieden war. Bei einer negativen Äußerung (z.B. "no, not the radio, the TV") interpretiert das System, dass die vorherige Äußerung falsch erkannt wurde, und nicht zur Adaption verwendet werden soll.

Der Erfindung liegt die Aufgabe zugrunde, das Training und/oder die Adaption des Spracherkenners für den Benutzer komfortabler zu gestalten.

Die Aufgabe wird bei dem eingangs genannten Verfahren durch folgende Schritte gelöst:
- Tätigung einer Spracheingabe;
- Verarbeitung der Spracheingabe mittels des Spracherkenners zur Erzeugung eines Spracherkennungsergebnisses;
- falls das Spracherkennungsergebnis einer Funktion des elektrischen Gerätes zuordenbar ist, Einwirkung auf die zuordenbare Funktion des elektrischen Geräts;
- Training oder Adaption des Spracherkenners auf der Basis des zur getätigten Spracheingabe gehörigen Spracherkennungsergebnisses, falls die Einwirkung auf die zuordenbare Funktion des elektrischen Geräts keine eine Ablehnung zum Ausdruck bringende Benutzereingabe bewirkt
wobei für den Fall, dass der Benutzer seine Ablehnung nicht zum Ausdruck bringt,
- für ein Spracherkennungsergebnis des Spracherkenners ein erstes Zuverlässigkeitsmaß bestimmt wird,
- ein Training oder eine Adaption des Spracherkenners auf der Basis des zur getätigten Spracheingabe korrespondierenden Spracherkennungsergebnisses durchgeführt wird, wenn das erste Zuverlässigkeitsmaß des Spracherkennungsergebnisses in einem vorgegebenen ersten Sollbereich liegt,
- und für den Fall, dass das erste Zuverlässigkeitsmaß nicht im ersten Sollbereich liegt und außerdem die nachfolgende Benutzereingabe mittels einer anderen Eingabemodalität erfolgt, vorgesehen ist, unter Berücksichtigung der Eingabe mittels der anderen Eingabemodalität ein zweites Zuverlässigkeitsmaß für das Spracherkennungsergebnis zu bestimmen und ein Training oder eine Adaption auf der Basis des Spracherkennungsergebnisses unter Berücksichtigung der mittels der anderen Eingabemodalität erfolgten Benutzereingabe durchzuführen, wenn das zweite Zuverlässigkeitsmaß in einem vorgegebenen zweiten Sollbereich liegt.

Das Training oder die Adaption mittels des erfindungsgemäßen Verfahrens setzt keine Aktivierung eines Trainings- oder Adaptionsmodus voraus. Auch eine Bestätigung von Benutzereingaben vor der Verwendung zum Training oder zur Adaption ist nicht erforderlich. Die Eignung einer Spracheingabe und eines zugehörigen Spracherkennungsergebnisses zum Training oder zur Adaption wird vielmehr dadurch festgestellt, dass auf der Basis des Spracherkennungsergebnisses auf eine zuordenbare Gerätefunktion eingewirkt wird, z. B. indem eine Sprachwahl ausgelöst wird, und wenn dann der Benutzer keine Eingabe tätigt, mit der er seine Ablehnung zum Ausdruck bringt, z. B. indem er die Durchführung der Gerätefunktion abbricht (Anspruch 4), wird davon ausgegangen, dass das Spracherkennungsergebnis die Spracheingabe richtig repräsentiert und zum Training oder zur Adaption verwendet werden kann. Der Benutzer kann seine Ablehnung beispielsweise auch durch eine Sprach- oder Tastatureingabe zum Ausdruck bringen.

Als zusätzliche Sicherungsmaßnahme wird für ein Spracherkennungsergebnis des Spracherkenners ein Zuverlässigkeitsmaß bestimmt und ein Training oder eine Adaption des Spracherkenners auf der Basis des zur getätigten Spracheingabe korrespondierenden Spracherkennungsergebnisses durchgeführt, wenn das Zuverlässigkeitsmaß des Spracherkennungsergebnisses in einem vorgegebenen Sollbereich liegt, bevor ein Spracherkennungsergebnis zum Training oder zur Adaption verwendet wird, so dass in Fällen, bei denen der Benutzer seine Ablehnung nicht zum Ausdruck bringt, obwohl das Spracherkennungsergebnis die Spracheingabe nicht korrekt repräsentiert, auf der Basis dieses Spracherkennungsergebnisses ein Training oder eine Adaption nicht durchgeführt wird. Diese Sicherungsmaßnahme soll Fälle absichern, in denen der Benutzer gerade abgelenkt wird und so seine Ablehnung nicht zum Ausdruck bringt, obwohl das Spracherkennungsergebnis unbefriedigend ist und auch nicht die beabsichtigte Einwirkung auf eine Gerätefunktion erfolgt.

Anspruch 1 bezieht sich auf solche Fälle, in denen die beschriebene Sicherungsmaßnahme aufgrund eines unbefriedigenden Zuverlässigkeitsmaßes ein Training oder eine Adaption verhindert. Erfolgt unmittelbar nach der Spracheingabe eine Eingabe mittels einer anderen Eingabemodalität, z. B. mittels Tastatureingabe, ist die Wahrscheinlichkeit groß, dass sich die vorhergehende Spracheingabe und die Eingabe mittels der anderen Eingabemodalität decken. Zur Beurteilung dieser Deckungsgleichheit wird ebenfalls ein Zuverlässigkeitsmaß gebildet, um die Fälle zu detektieren, bei denen sich die Spracheingabe und die folgende Eingabe mittels der anderen Eingabemodalität nicht decken. Falls dieses Zuverlässigkeitsmaß in einem vorgegebenen Sollbereich liegt, wird ein Training oder eine Adaption unter Berücksichtigung des Spracherkennungsergebnisses und der Eingabe mittels der anderen Eingabemodalität durchgeführt.

Anspruch 2 bezieht sich wie Anspruch 1 auf Fälle, in denen eine Spracheingabe zunächst als nicht zum Training oder zur Adaption geeignet beurteilt wird, anschließend jedoch die nächste Eingabe mittels einer anderen Eingabemodalität erfolgt, so dass wiederum die Wahrscheinlichkeit groß ist, dass die Eingabe mittels der anderen Eingabemodalität und die vorhergehende Spracheingabe sich decken. Im Gegensatz zu Anspruch 4 erfasst Anspruch 5 solche Fälle, in denen nach einer Spracheingabe der Benutzer eine seine Ablehnung zum Ausdruck bringende Eingabe tätigt, so dass aus diesem Grund zunächst kein Training bzw. keine Adaption erfolgt.

Auch hier wird vor dem Training bzw. vor der Adaption nach der Eingabe mittels der anderen Eingabemodalität eine Beurteilung mittels eines Zuverlässigkeitsmaßes durchgeführt, um die Fälle zu detektieren, bei denen sich die Spracheingabe und die folgende Eingabe mittels der anderen Eingabemodalität nicht decken

Bei der Ausgestaltung gemäß Anspruch 3 wird zu einem Spracherkennungsergebnis jeweils mindestens eine Spracherkennungsergebnisalternative erzeugt. Wird auf der Basis der letzten Spracheingabe und eines zugehörigen Spracherkennungsergebnisses ein Training oder eine Adaption durchgeführt, wird für den Fall, dass die vorletzte Spracheingabe kein Training bzw. keine Adaption bewirkt hat, zusätzlich geprüft, ob das Spracherkennungsergebnis zur letzten Spracheingabe einer Spracherkennungsergebnisalternative zur vorletzten Spracheingabe entspricht. Ist dies der Fall, wird davon ausgegangen, dass die vorletzte Spracheingabe und die letzte Spracheingabe einander entsprechen. Bei einem anschließenden zusätzlichen Training bzw. einer anschließenden zusätzlichen Adaption werden Parameter des Spracherkenners so angepasst, dass sowohl die vorletzte Spracheingabe als auch die letzte Spracheingabe bei einer erneuten Eingabe zum richtigen Spracherkennungsergebnis führen würden, d.h. zum Spracherkennungsergebnis, das zur letzten Spracheingabe ermittelt wurde.

Bei der Ausgestaltung gemäß Anspruch 5 wird einem Benutzer ein Spracherkennungsergebnis akustisch oder visuell mitgeteilt. Damit ist ein Benutzer bei der Beurteilung der Richtigkeit eines Erkennungsergebnisses nicht allein auf das Erkennen der Durchführung einer Gerätefunktion angewiesen. Die zusätzlichen Informationen benötigt der Benutzer dann, wenn die Durchführung einer Gerätefunktion für den Benutzer nicht erkennbar ist oder ihm nur unzureichende Informationen zum vom Spracherkenner erzeugten Spracherkennungsergebnis liefert.

Die Ansprüche 6 und 7 beziehen sich auf die Anwendung der Erfindung in einem Mobiltelefon. Der Spracherkenner wird hier insbesondere zur Sprachwahl eingesetzt.

Ansprüche 8 bis 10 betreffen ein elektrisches Gerät zur Durchführung des erfindungsgemäßen Verfahrens. In Anspruch 11 ist das elektrische Gerät als Mobilfunkendgerät konkretisiert.

Ausführungsbeispiele der Erfindung werden im folgenden anhand der Zeichnungen näher erläutert. Es zeigen:
Fig. 1 ein Blockschaltbild eines Mobilfunkendgeräts und
Fig.2 bis 5 Flussdiagramme zu verschiedenen Varianten der Erfindung.

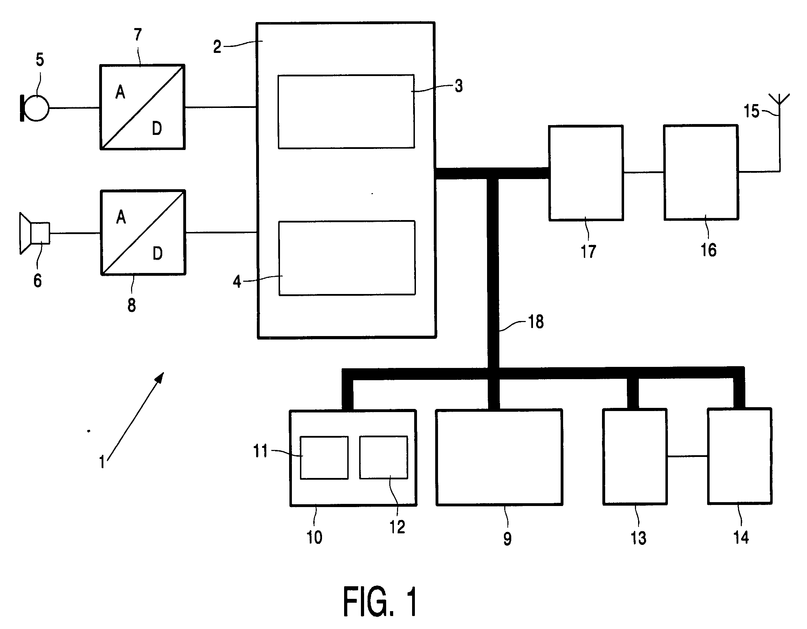

Fig.1 zeigt ein als Mobilfunkendgerät ausgestaltetes elektrisches Gerät 1 mit einem digitalen Signalprozessor 2, der einerseits zur Sprachcodierung/Sprachdecodierung und zur Freisprech-Signalverarbeitung (zusammengefasst durch einen Funktionsblock 3) und andererseits zur Durchführung von Spracherkennungsprozeduren eines Spracherkenners (Funktionsblock 4) zusammengefasst ist, eingesetzt wird. Das Mobilfunkendgerät 1 weist ein Mikrofon 5 und einen Lautsprecher 6 auf, die über Analog-Digital-Wandler 7 und 8 mit dem digitalen Signalprozessor 2 gekoppelt sind. Das Mobilfunkendgerät 1 enthält ausserdem einen Mikrocontroller 9 zur zentralen Steuerung der Funktionen des Mobilfunkendgeräts 1. Weiterhin ist eine Speichenrorrichtung 10 vorgesehen, die zur Speicherung eines Lexikons 11 für den Spracherkenner 4 und sonstiger Daten 12 dient, wobei die sonstigen Daten vereinfachend durch den Funktionsblock 12 zusammen gefasst sind, da sie für die Erfindung nicht wesentlich sind. Das Lexikon 11 enthält das Vokabular des Spracherkenners 4 in Form von akustischen Modellen, die als Hidden-Markov- Modelle realisiert sind; das Lexikon 11 ist als Teil des Spracherkenners 4 anzusehen. Das Mobilfunkendgerät 1 enthält außerdem eine Tastatureingabeeinheit 13 und eine Anzeigeeinheit (Display) 14. Über eine Antenne 15 werden Hochfrequenzsignale empfangen und abgestrahlt, die von einer Sende-/Empfangseinheit 16 verarbeitet werden. Eine Kanalcodierungs-/Kanaldecodierungseinheit 17 dient zur Kanalcodierung von zu sendenden Signalen bzw. zur Kanaldecodierung empfangener Signale. Ein Bussystem 18 verbindet den digitalen Signalprozessor 2, den Mikrocontroller 9, die Speichervorrichtung 10, die Tastatureingabeeinheit 13, die Anzeigeeinheit 14 und die Kanalcodierungs-/decodierungseinheit 17.

Mittels des Sprackerkenners 4 ist es möglich, durch über das Mikrofon 5 eingegebene Spracheingaben auf Funktionen des Mobilfunkendgerätes 1 einzuwirken. Im vorliegenden Fall kann bspw. mittels einer Spracheingabe eine Anwahl eines anderen Teilnehmers ausgelöst werden (Sprachwahl). Dabei sagt ein Benutzer entweder die Telefonnummer des anzurufenden anderen Teilnehmers oder er spricht den Namen des anderen Teilnehmers aus,
wobei dann vorher dem Namen die zugehörige Telefonnummer zugeordnet sein muss,
wobei zur Eingabe dieser Zuordnung entweder nur Spracheingaben oder nur Tastatureingaben über die Tastatureingabeeinheit 13 oder sowohl Tastatureingaben als auch Spracheingaben dienen können. Um eine einwandfreie Funktion des Spracherkenners 4 zu gewährleisten, ist ein Training des Spracherkenners 4 erforderlich, d.h. es muss ein an die jeweilige Anwendung angepasstes und im Lexikon 11 abgelegtes Vokabular aufgebaut werden. Auch eine spätere Adaption von bereits trainierten akustischen Modellen des Spracherkenners 4 ist hier vorgesehen, um den Spracherkenner auf veränderte Einsatzbedingungen anzupassen.

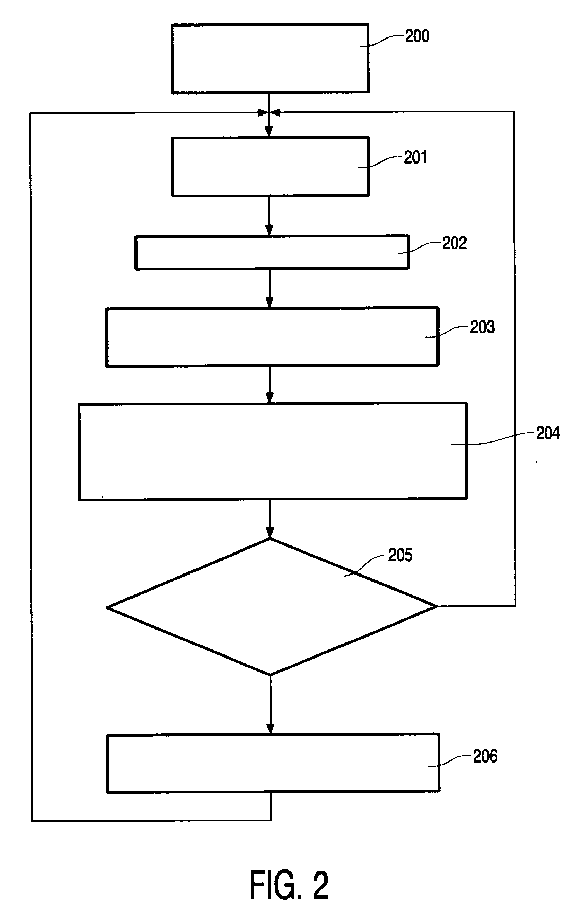

Die Fig 2 bis 5 zeigen verschiedene Ausgestaltungen zum Training oder zur Adaption des Spracherkenners 4.

Bei dem in Fig 2 gezeigten Ansatz wird zunächst in einem Schritt 200 der Spracheingabemodus zB. durch Drücken einer entsprechenden Aktivierungstaste aktiviert. In einem Schritt 201 tätigt der Benutzer eine Spracheingabe, wobei er hier den Namen eines anderen Teilnehmers eingibt, den er anrufen will. In Schritt 202 wird mit Hilfe des Spracherkenners 4 eine automatische Spracherkennung durchgeführt und ein Spracherkennungsergebnis erzeugt. Dieses Spracherkennungsergebnis wird in Schritt 203 an den Benutzer ausgegeben, zB. durch visuelle Ausgeben über die Anzeigeeinheit 14 oder mittels einer akustischen Ausgabe über den Lautsprecher 6. Ausgehend davon, dass dem erkannten Namen schon vorher eine Telefonnummer zugeordnet worden ist, wird nun in Schritt 204 eine automatische Anwahl bezüglich dieser Telefonnummer durchgeführt. In Schritt 205 wird abgefragt, ob die automatische Anwahl durch den Benutzer unterbrochen wird (bspw. durch Drücken einer bestimmten Taste oder durch Sprechen eines Stop-Sprachkommandos in den Fällen, in denen der Benutzer ein falsches Spracherkennungsergebnis erkennt und dieses ablehnt), erfolgt ein Rücksprung an die Stelle zwischen Schritt 200 und Schritt 201, wobei das Gerät zum Empfang einer weiteren Spracheingabe bereit ist. Wird die automatische Anwahl nicht unterbrochen und in Schritt 205 die Abfrage mit nein beantwortet, erfolgt ein Training oder eine Adaption des Spracherkenners 4 auf der Basis des in Schritt 202 ermittelten Spracherkennungsergebnisses. Anschließend erfolgt ein Rücksprung zwischen die Schritte 200 und 201, so dass eine weitere Spracheingabe getätigt werden kann.

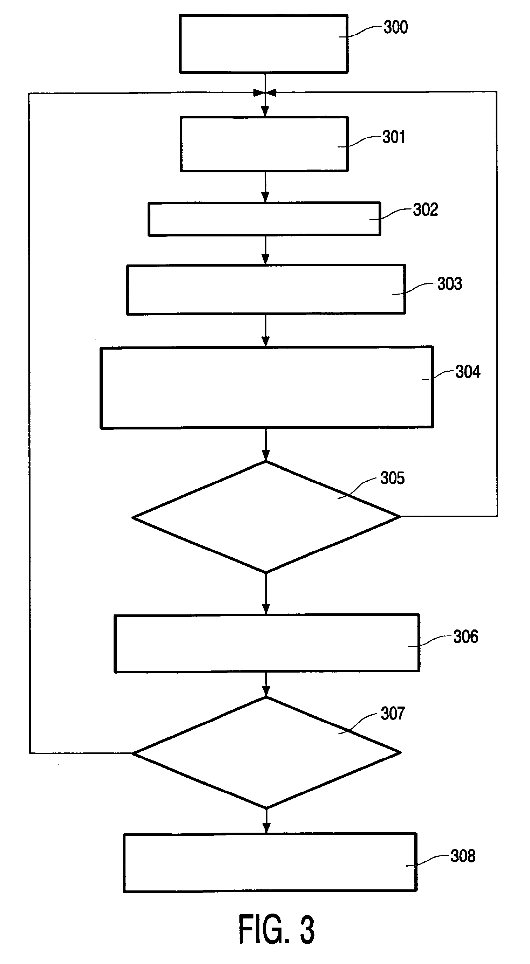

Bei der Ausgestaltung gemäss Fig. 3 wird zunächst in einem Schritt 300 der Spracheingabemodus des Mobilfunkendgeräts 1 aktiviert. Danach wird in Schritt 301 eine Spracheingabe getätigt, d.h. im vorliegenden Fall ein Name ausgesprochen. Nach der Durchführung einer Spracherkennung in Schritt 302 wird in Schritt 303 das Spracherkennungsergebnis akustisch oder visuell an den Benutzer wiedergegeben. Anschließend wird wie schon in Fig 2 eine automatische Anwahl eines Teilnehmers mit dem erkannten Namen ausgelöst. In Schritt 305 wird abgefragt, ob die automatische Anwahl vom Benutzer unterbrochen wird. Ist dies der Fall, wird an die Stelle zwischen den Schritten 300 und 301 zurück gesprungen, denn dann ist davon auszugehen, dass der Benutzer das Spracherkennungsergebnis als falsch erkannt hat und ablehnt. Wird die automatische Anwahl nicht unterbrochen, erfolgt in Schritt 306 die Berechnung eines Zuverlässigkeitsmaßes für das Spracherkennungsergebnis In Schritt 307 wird dann abgefragt, ob das Zuverlässigkeitsmaß in einem vorgegebenen Sollbereich liegt. Ist dies nicht der Fall wird an die Stelle zwischen den Schritten 300 und 301 zurückgesprungen. Liegt das Zuvedässigkeitsmaß in dem vorgegeben Sollbereich, ist davon auszugeben, dass das Spracherkennungsergebnis die Spracheingabe tatsächlich korrekt repräsentiert und es wird in Schritt 308 auf der Basis dieses Spracherkennungsergebnisses ein Training oder eine Adaption durchgeführt.

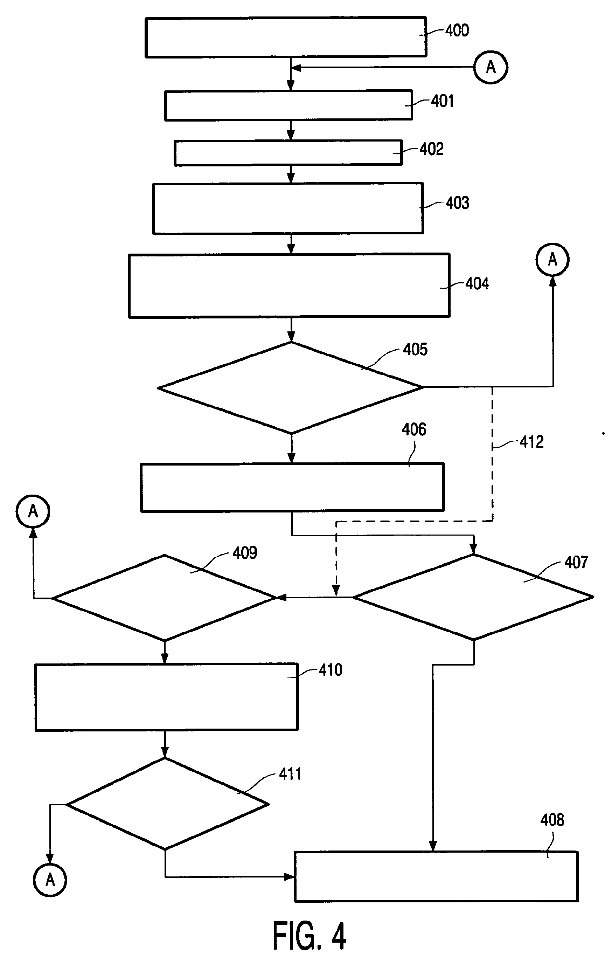

Bei der Ausgestaltungsvariante gemäß Fig.4 wird in einem Schritt 400 zunächst der Spracheingabemodus aktiviert. Danach wird in Schritt 401 eine Spracheingabe getätigt, d.h. der Name eines anzurufenden Teilnehmers ausgesprochen. In Schritt 402 wird eine Spracherkennung bezüglich der getätigten Spracheingabe durchgeführt. Das Spracherkennungsergebnis wird akustisch oder visuell in Schritt 403 an den Benutzer ausgegeben. In Schritt 404 wird eine automatische Anwahl eines Teilnehmers mit dem erkannten Namen ausgelöst. In Schritt 405 wird überprüft, ob die Anwahl vom Benutzer unterbrochen wird. Ist dies der Fall, d.h. wird das Spracherkennungsergebnis vom Benutzer als falsch erkannt wird an die Stelle zwischen den Schritten 400 und 401 zurückgesprungen. Wird die automatische Anwahl vom Benutzer nicht unterbrochen, wird für das Spracherkennungsergebnis in Schritt 406 ein erstes Zuverlässigkeitsmaß bestimmt. Bei einer Abfrage in Schritt 407 wird festgestellt, ob dieses erste Zuverlässigkeitsmaß in einem vorgegebenen ersten Sollbereich liegt. Ist dies der Fall, wird in einem Schritt 408 auf der Basis des Spracherkennungsergebnisses ein Training oder eine Adaption des Spracherkenners 4 durchgeführt.

Wird in Schritt 407 festgestellt, dass das erste Zuverlässigkeitsmaß nicht in dem ersten Sollbereich liegt, wird in Schritt 409 überprüft, ob die nachfolgende Eingabe mittels einer anderen Eingabemodalität, bspw. durch Tastatureingabe, erfolgt. Ist dies nicht der Fall, erfolgt wiederum ein Rücksprung an die Stelle zwischen den Schritten 400 und 401. Wird in Schritt 409 dagegen festgestellt, dass die unmittelbar nachfolgende Eingabe mittels einer anderen Eingabemodalität - also insbesondere durch Tastatureingabe - erfolgt, ist die Wahrscheinlichkeit groß, dass sich die vorhergehende Spracheingabe und die jetzt nachfolgende Eingabe mittels der anderen Eingabemodalität entsprechen, dh der Benutzer gesucht nach einer erfolglosen Sprachwahl eine Anwahl des gleichen Teilnehmers durch Eingabe mittels der anderen Eingabemodalität auszulösen. Nach der Eingabe mittels der anderen Eingabemodalität wird in Schritt 410 ein zweites Zuverlässigkeitsmaß für das vorhergehende Spracherkennungsergebnis unter Berücksichtigung der Eingabe mittels der anderen Eingabemodalität bestimmt. In Schritt 411 wird überprüft, ob das zweite Zuverlässigkeitamaß in einem vorgegebenen zweiten Sollbereich liegt. Ist dies der Fall wird mit Schritt 408 ein Training oder eine Adaption des Spracherkenners auf der Basis des Spracherkennungsergebnisses unter Berücksichtigung der mittels der anderen Eingabemodalität erfolgten Benutzereingabe durchgeführt. Wird in Schritt 411 festgestellt, dass das zweite Zuverlässigkeitsmaß nicht im vorgegeben zweiten Sollbereich liegt, entspricht dies der Annahme das sich die Eingabe mittels der anderen Eingabemodalität und die vorhergehende Spracheingabe nicht entsprechen und es erfolgt ein Rücksprung zwischen die Schritte 400 und 401.

Grundsätzlich kann auch in den Fällen, in denen in Schritt 405 festgestellt wird, dass der Benutzer die Anwahl eines Teilnehmers unterbricht und er somit die Ablehnung des Spracherkennungsergebnisses zum Ausdruck bringt, anstelle eines Rücksprungs zwischen die Schritte 400 und 401 mit der Abfrage in Schritt 409 fortgefahren werden, was durch durch den mit einer gestrichelten Linie dargestellten Sprung 412 angedeutet ist. Erfolgt also unmittelbar anschließend eine Eingabe mittels einer anderen Eingabemodalität, kann wiederum mit einer hohen Wahrscheinlichkeit davon ausgegangen werden, dass sich die Eingabe mittels der anderen Eingabemodalität und die vorausgehende Spracheingabe einander entsprechen und das Spracherkennungsergebnis die Spracheingabe nicht richtig repräsentiert. Trotzdem kann das Spracherkennungsergebnis, auch wenn es nicht vollständig richtig ist, zum Training oder zur Adaption des Spracherkenners verwendet werden, wenn eine ausreichende Ähnlichkeit mit der Spracheingabe bzw. mit der Eingabe mittels der anderen Eingabemodalität besteht, was mittels der Überprüfung anhand eines Zuverlässigkeitsmaßes abgeschätzt wird. In das Training gehen dann sowohl die im Spracherkennungsergebnis enthaltenen Informationen als auch die in der Eingabe mittels der anderen Eingabemodalität enthaltenen Informationen ein.

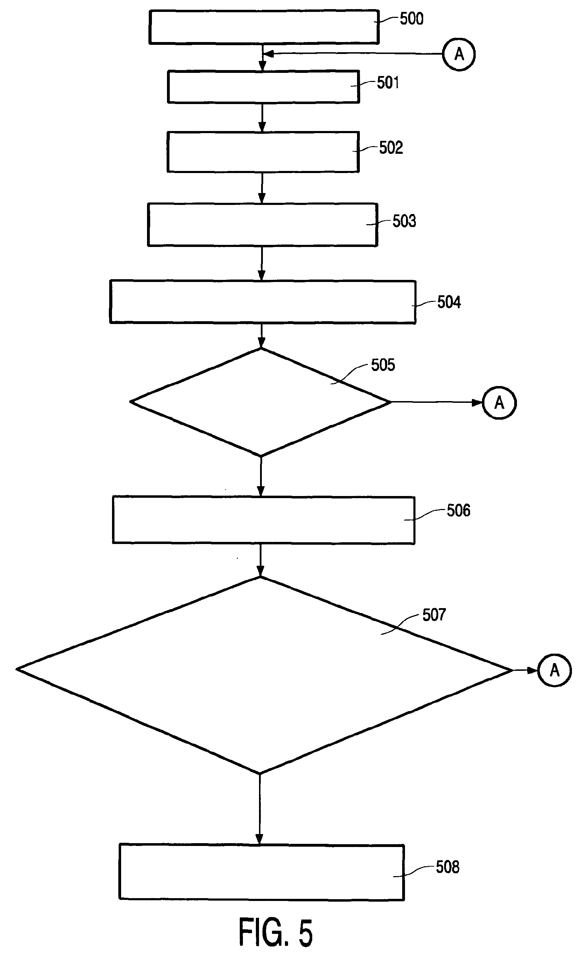

Schließlich zeigt Fig.5 eine Erfindungsvariante, bei der ein diskriminatives Training bzw eine diskriminative Adaption eingesetzt wird. In einem Schritt 500 wird der Spracheingabemodus aktiviert, in Schritt 501 eine Spracheingabe betätigt, d.h. hier ein Name ausgesprochen und in einem Schritt 502 wird eine Spracherkennung mittels des Spracherkenners 4 durchgeführt, bei der neben dem Spracherkennungsergebnis mindestens eine weitere Spracherkennungsergebnisalternative erzeugt wird. In einem Schritt 503 wird das Spracherkennungaergsbnis akustisch oder visuell an den Benutzer ausgegeben. In einem Schritt 504 wird bezüglich des Spracherkennungsergebnisses eine automatische Anwahl eines Teilnehmers mit dem erkannten Namen durchgeführt. In einem Schritt 505 wird überprüft, ob die Anwahl vom Benutzer unterbrochen wird. Ist dies der Fall wird an die Stelle zwischen den Schritten 500 und 501 zurückgesprungen. Ist dies nicht der Fall wird in Schritt 506 ein Training oder eine Adaption des Spracherkenners 4 auf der Basis dieses letzten Spracherkennungsergebnisses durchgeführt. In einem Abfrageschritt 507 wird danach weiterhin überprüft, ob dieses letzte Spracherkennungsergebnis einer zur vorletzten Spracheingabe ermittelten Spracherkennungsergsbnisalternative entspricht und ob die vorletzte Spracheingabe zu einem Abbruch der automatischen Anwahl durch den Benutzer geführt hat. Ist eine der Bedingungen nicht erfüllt, erfolgt ein Rücksprung zwischen die Schritte 500 und 501. Sind beide Bedingungen erfüllt, wird davon ausgegangen, dass die genannte Spracherkennungsalternative zur vorletzten Spracheingabe eigentlich das richtige Spracherkennungaergebnis zur vorletzten Spracheingabe repräsentiert. Für diesen Fall wird in Schritt 508 ein diskriminatives Training oder eine diskriminative Adaption durchgeführt, wobei vorausgesetzt wird das die letzte und vorletzte Spracheingabe dasselbe Wort oder die selbe Wortfolge repräsentieren. Die zum entsprechenden Vokabulareintrag im Lexikon 11 gehörigen akustischen Modelle werden so angepasst, dass der Spracherkenner 4 sowohl zur letzten als auch zur vorletzten Spracheingabe das richtige Spracherkennungsergebnis erzeugen würde. Nach der Durchführung des Schrittes 508 wird wiederum an die Stelle zwischen den Schritten 500 und 501 zurück gesprungen.

Die Erfindung ist weder auf die Anwendung in einem Mobilfunkendgerät noch auf Sprachwahl beschränkt. Mittels Spracheingaben kann auch auf andere Funktionen eines elektrischen Gerätes eingewirkt werden, z.B. auf die Lautstärkeeinstellung von Sprachausgaben. Auch muss nicht unbedingt eine akustische oder visuelle eines Spracherkennungsergebnisses an den Benutzer erfolgen, insbesondere dann nicht, wenn der Benutzer aus der Durchführung einer zu einer Spracheingabe korrespondierenden Gerätefunktion ohne weitere Information auf die Richtigkeit des Spracherkennungsergebnisees schließen kann. Weiterhin kann der Benutzer seine Ablehnung auch zusätzlich oder alternativ durch vorgegebene Eingaben (z B. vorgegebene Sprach- oder Tastatureingaben) zum Ausdruck bringen, die eine eingeleitete Gerätefunktion nicht unterbrechen.

Der Schutzumfang der vorliegenden Erfindung wird dabei nur von den Patentansprüchen bestimmt.

## Patentansprüche

1. Verfahren zum Training oder zur Adaption eines Spracherkenners (4), der zur Einwirkung auf Funktionen eines elektrischen Geräts (1) dient, wobei folgende Schritte vorgesehen sind:
- Tätigung einer Spracheingabe;
- Verarbeitung der Spracheingabe mittels des Spracherkenners (4) zur Erzeugung eines Spracherkennungsergebnisses;
- falls das Spracherkennungsergebnis einer Funktion des elektrischen Gerätes (1) zuordenbar ist, Einwirkung auf die zuordenbare Funktion des elektrischen Geräts (1);
- Training oder Adaption des Spracherkenners (4) auf der Basis des zur getätigten Spracheingabe gehörigen Spracherkennungsergebnisses, falls die Einwirkung auf die zuordenbare Funktion des elektrischen Geräts (1) keine eine Ablehnung zum Ausdruck bringende Benutzereingabe bewirkt,
wobei für den Fall, dass der Benutzer seine Ablehnung nicht zum Ausdruck bringt,
- für ein Spracherkennungsergebnis des Spracherkenners (4) ein erstes Zuverlässigkeitsmaß bestimmt wird,
- das Training oder die Adaption des Spracherkenners (4) auf der Basis des zur getätigten Spracheingabe korrespondierenden Spracherkennungsergebnisses durchgeführt wird, wenn das erste Zuverlässigkeitsmaß des Spracherkennungsergebnisses in einem vorgegebenen ersten Sollbereich liegt,
- und für den Fall, dass das erste Zuverlässigkeitsmaß nicht im ersten Sollbereich liegt und außerdem eine nachfolgende Benutzereingabe mittels einer anderen Eingabemodalität erfolgt, vorgesehen ist, unter Berücksichtigung der Eingabe mittels der anderen Eingabemodalität ein zweites Zuverlässigkeitsmaß für das Spracherkennungsergebnis zu bestimmen und das Training oder die Adaption auf der Basis des Spracherkennungsergebnisses unter Berücksichtigung der mittels der anderen Eingabemodalität erfolgten Benutzereingabe durchzuführen, wenn das zweite Zuverlässigkeitsmaß in einem vorgegebenen zweiten Sollbereich liegt.

2. Verfahren zum Training oder zur Adaption eines Spracherkenners (4), der zur Einwirkung auf Funktionen eines elektrischen Geräts (1) dient, wobei folgende Schritte vorgesehen sind:
- Tätigung einer Spracheingabe;
- Verarbeitung der Spracheingabe mittels des Spracherkenners (4) zur Erzeugung eines Spracherkennungsergebnisses;
- falls das Spracherkennungsergebnis einer Funktion des elektrischen Gerätes (1) zuordenbar ist, Einwirkung auf die zuordenbare Funktion des elektrischen Geräts (1);
- Training oder Adaption des Spracherkenners (4) auf der Basis des zur getätigten Spracheingabe gehörigen Spracherkennungsergebnisses, falls die Einwirkung auf die zuordenbare Funktion des elektrischen Geräts (1) keine eine Ablehnung zum Ausdruck bringende Benutzereingabe bewirkt,
wobei für den Fall, dass nach einer Spracheingabe eine eine Ablehnung eines Spracherkennungsergebnisses zum Ausdruck bringende Benutzereingabe erfolgt und außerdem im Anschluß daran eine Benutzereingabe mittels einer anderen Eingabemodalität erfolgt, vorgesehen ist, unter Berücksichtigung der Eingabe mittels der anderen Eingabemodalität ein Zuvedässigkeitsmaß für das Spracherkennungsergebnis zu bestimmen und das Training oder die Adaption des Spracherkenners (4) durchzuführen, wobei vorausgesetzt wird, dass die Spracheingabe und die Benutzereingabe mittels der anderen Eingabemodalität dasselbe Wort oder dieselbe Wortfolge repräsentieren.

3. Verfahren zum Training oder zur Adaption eines Spracherkenners (4), der zur Einwirkung auf Funktionen eines elektrischen Geräts (1) dient, wobei folgende Schritte vorgesehen sind:
- Tätigung einer Spracheingabe;
- Verarbeitung der Spracheingabe mittels des Spracherkenners (4) zur Erzeugung eines Spracherkennungsergebnisses ;
- falls das Spracherkennungsergebnis einer Funktion des elektrischen Gerätes (1) zuordenbar ist, Einwirkung auf die zuordenbare Funktion des elektrischen Geräts (1);
- Training oder Adaption des Spracherkenners (4) auf der Basis des zur getätigten Spracheingabe gehörigen Spracherkennungsergebnisses, falls die Einwirkung auf die zuordenbare Funktion des elektrischen Geräts (1) keine eine Ablehnung zum Ausdruck bringende Benutzereingabe bewirkt, wobei
- der Spracherkenner (4) zusätzlich zu einem Spracherkennungsergebnis jeweils mindestens eine Spracherkennungsergebnisalternative liefert,
- das Training oder die Adaption des Spracherkenners (4) auf der Basis des zur letzten Spracheingabe gehörigen Spracherkennungsergebnisses erfolgt, falls die Einwirkung auf die dem Sprachexlcennungsergebnis zuordenbaren Funktion des elektrischen Geräts (1) keine eine Ablehnung des Spracherkennungsergebnisses zum Ausdruck bringende Benutzereingabe bewirkt und
- für den Fall, dass
- das Spracherkennungsergebnis einer Spracherkennungsergebnisalternative zur vorletzten Spracheingabe entspricht und
- eine eine Ablehnung des vorletzten Spracherkennungsergebnisses zum Ausdruck bringende Benutzereingabe erfolgt ist,
ein weiteres Training oder eine weitere Adaption des Spracherkenners erfolgt, bei dem vorausgesetzt wird, dass die letzte und vorletzte Spracheingabe dasselbe Wort oder dieselbe Wortfolge repräsentieren.

4. Verfahren nach einem der Ansprüche 1 bis 3,
**dadurch gekennzeichnet,**
**dass** das Training oder die Adaption des Spracherkenners (4) erfolgt, wenn die Durchführung der Funktion des elektrischen Geräts (1) nicht durch eine Benutzereingabe abgebrochen wird.

5. Verfahren nach einem der Ansprüche 1 bis 3,
**dadurch gekennzeichnet,**
**dass** eine akustische oder visuelle Wiedergabe eines Spracherkennungsergebnisses vorgesehen ist.

6. Verfahren nach einem der Ansprüche 1 bis 3,
**dadurch gekennzeichnet,**
**dass** das elektrische Gerät (1) ein Mobiltelefon ist.

7. Verfahren nach Anspruch 6,
**dadurch gekennzeichnet,**
**dass** mittels einer Spracheingabe ein Anwahlvorgang ausgelöst wird

8. Elektrisches Gerät (1) mit einem Spracherkenner (4), der zur Einwirkung auf Funktionen des elektrischen Geräts dient, wobei das elektrisches Gerät (1) und der Spracherkenner (4) zum Training oder zur Adaption des Spracherkenners (4) derart ausgestaltet sind, dass
- Mittel zum Empfang einer getätigten Spracheingabevorgesehen sind;
- der Spracherkenner (4) durch Verarbeitung der Spracheingabe zur Erzeugung eines Spracherkennungsergebnissesvorgesehen ist;
- falls das Spracherkennungsergebnis einer Funktion des elektrischen Gerätes (1) zuordenbar ist, Mittel zur Einwirkung auf die zuordenbare Funktion des elektrischen Geräts (1) vorgesehen sind;
- der Spracherkenner (4) auf der Basis des zur getätigten Spracheingabe gehörigen Spracherkennungsergebnisseszum Training oder zur Adaption vorgesehen ist, falls die Einwirkung auf die zuordenbare Funktion des elektrischen Geräts (1) keine eine Ablehnung zum Ausdruck bringende Benutzereingabe bewirkt
wobei für den Fall, dass nach einer Spracheingabe eine eine Ablehnung eines Spracherkennungsergebnisses zum Ausdruck bringende Benutzereingabe erfolgt und außerdem im Anschluß daran eine Benutzereingabe mittels einer anderen Eingabemodalität erfolgt, vorgesehen ist, unter Berücksichtigung der Eingabe mittels der anderen Eingabemodalität ein Zuverlässigkeitsmaß für das Spracherkennungsergebnis zu bestimmen und das Training oder die Adaption des Spracherkenners (4) durchzuführen, wobei vorausgesetzt wird, dass die Spracheingabe und die Benutzereingabe mittels der anderen Eingabemodalität dasselbe Wort oder dieselbe Wortfolge repräsentieren.

9. Elektrisches Gerät (1) mit einem Spracherkenner (4), der zur Einwirkung auf Funktionen des elektrischen Geräts dient, wobei das elektrisches Gerät (1) und der Spracherkenner (4) zum Training oder zur Adaption des Spracherkenners (4) derart ausgestaltet sind, dass
- Mittel zum Empfang einer getätigten Spracheingabe vorgesehen sind;
- der Spracherkenner (4) durch Verarbeitung der Spracheingabe zur Erzeugung eines Spracherkennungsergebnissesvorgesehen ist;
- falls das Spracherkennungsergebnis einer Funktion des elektrischen Gerätes (1) zuordenbar ist, Mittel zur Einwirkung auf die zuordenbare Funktion des elektrischen Geräts (1) vorgesehen sind;
- der Spracherkenner (4) auf der Basis des zur getätigten Spracheingabe gehörigen Spracherkennuugsezgebnisses zum Training oder zur Adaption vorgesehen ist, falls die Einwirkung auf die zuordenbare Funktion des elektrischen Geräts (1) keine eine Ablehnung zum Ausdruck bringende Benutzereingabe bewirkt,
wobei für den Fall, dass der Benutzer seine Ablehnung nicht zum Ausdruck bringt, für ein Spracherkennuugsergebnis des Spracherkenners (4) ein erstes Zuverlässigkeitsmaß bestimmt wird,
das Training oder die Adaption des Spracherkenners (4) auf der Basis des zur getätigten Spracheingabe korrespondierenden Spracherkennungsergebnisses durchgeführt wird, wenn das erste Zuverlässigkeitsmaß des Spracherkennungsergebnisses in einem vorgegebenen ersten Sollbereich liegt,
und für den Fall, dass das erste Zuverlässigkeitsmaß nicht im ersten Sollbereich liegt und außerdem die nachfolgende Benutzereingabe mittels einer anderen Eingabemodalität erfolgt, vorgesehen ist, unter Berücksichtigung der Eingabe mittels der anderen Eingabemodalität ein zweites Zuverlässigkeitsmaß für das Spracherkeztnungsergebnis zu bestimmen und das Training oder die Adaption auf der Basis des Spracherkennungsergebnisses unter Berücksichtigung der mittels der anderen Eingabemodalität erfolgten Benutzereingabe durchzuführen, wenn das zweite Zuverlässigkeitsmaß in einem vorgegebenen zweiten Sollbereich liegt.

10. Elektrisches Gerät (1) mit einem Spracherkenner (4), der zur Einwirkung auf Funktionen des elektrischen Geräts dient, wobei das elektrisches Gerät (1) und der Spracherkenners (4) zum Training oder zur Adaption des Spracherkenners (4) derart ausgestaltet sind, dass
- Mittel zum Empfang einer getätigten Spracheingabe vorgesehen sind;
- der Spracherkenner (4) durch Verarbeitung der Spracheingabe zur Erzeugung eines Spracherkennungsergebnisses vorgesehen ist;
- falls das Spracherkennungsergebnis einer Funktion des elektrischen Gerätes (1) zuordenbar ist, Mittel zur Einwirkung auf die zuordenbare Funktion des elektrischen Geräts (1) vorgesehen sind;
- der Spracherkenner (4) auf der Basis des zur getätigten, Spracheingabe gehörigen Spracherkennungsergebnisses zum Training oder zur Adaption vorgesehen ist, falls die Einwirkung auf die zuordenbare Funktion des elektrischen Geräts (1) keine eine Ablehnung zum Ausdruck bringende Benutzereingabe bewirkt, wobei
- der Spracherkenner (4) zusätzlich zu einem Spracherkennungsergebnis jeweils mindestens eine Spracherkennungsergebnisalternative liefert,
- das Training oder die Adaption des Spracherkenners (4) auf der Basis des zur letzten Spracheingabe gehörigen Spracherkennungsergebnisses erfolgt, falls die Einwirkung auf die dem Spracherkennungsergebnis zuordenbaren Funktion des elektrischen Geräts (1) keine eine Ablehnung des Spracherkennungsergebnisses zum Ausdruck bringende Benutzereingabe bewirkt und
- für den Fall, dass
- das Spracherkennungsergebnis einer Spracherkennungsergebnisalternative zur vorletzten Spracheingabe entspricht und
- eine eine Ablehnung des vorletzten Spracherkennungsergebnisses zum Ausdruck bringende Benutzereingabe erfolgt ist,
ein weiteres Training oder eine weitere Adaption des Spracherkenners erfolgt, bei dem vorausgesetzt wird, dass die letzte und vorletzte Spracheingabe dasselbe Wort oder dieselbe Wortfolge repräsentieren.

11. Elektrisches Gerät nach Ansprüche 8 bis 10,
**dadurch gekennzeichnet,**
**dass** das elektrische Gerät ein Mobilfunkendgerät (1) ist.

## Claims

1. A method for the training or adaptation of a speech recognizer (4) which is used to act upon functions of an electrical appliance (1), in which the following steps are provided:
- performance of a speech input;
- processing of the speech input by means of the speech recognizer (4) for the production of a speech recognition result;
- if the speech recognition result can be assigned to a function of the electrical appliance (1), action upon the assignable function of the electrical appliance (1);
- training or adaptation of the speech recognizer (4) on the basis of the speech recognition result associated with the speech input made, if the action upon the assignable function of the electrical appliance (1) does not cause a user input to appear expressing rejection,
in which for the case where the user does not express his rejection,
- a first reliability grade is determined for a speech recognition result of the speech recognizer,
- the training or the adaptation of the speech recognizer is performed based on the result of the speech recognition corresponding to the uttered speech input when the first reliability grade of the result of the speech recognition is found in a predefined first desired range,
- and for the case where the first reliability grade is not found to be in the first desired range and, furthermore, a next user input is made by means of another input method, there is provided that, reckoning with the input by means of the other input method, a second reliability grade for the result of the speech recognition is determined and the training or the adaptation is carried out based on the result of the speech recognition reckoning with the other speech input performed via the other input method if the second reliability grade is found to be in a second desired range.

2. A method for the training or adaptation of a speech recognizer (4) which is used to act upon functions of an electrical appliance (1), in which the following steps are provided:
- performance of a speech input;
- processing of the speech input by means of the speech recognizer (4) for the production of a speech recognition result;
- if the speech recognition result can be assigned to a function of the electrical appliance (1), action upon the assignable function of the electrical appliance (1);
- training or adaptation of the speech recognizer (4) on the basis of the speech recognition result associated with the speech input made, if the action upon the assignable function of the electrical appliance (1) does not cause a user input to appear expressing rejection,
in which for the case where after a speech input a user input is made expressing a rejection of a speech recognition result and, furthermore, connected to this, a user input is made by means of another input method, there is provided that, reckoning with the input by means of the other input method, a second reliability grade for the result of the speech recognition is determined and the training or the adaptation of the speech recognizer (4) is carried out while it is assumed that the speech input and the user input performed via the other input method represent the same word sequence.

3. A method for the training or adaptation of a speech recognizer (4) which is used to act upon functions of an electrical appliance (1), in which the following steps are provided:
- performance of a speech input;
- processing of the speech input by means of the speech recognizer (4) for the production of a speech recognition result;
- if the speech recognition result can be assigned to a function of the electrical appliance (1), action upon the assignable function of the electrical appliance (1);
- training or adaptation of the speech recognizer (4) on the basis of the speech recognition result associated with the speech input made, if the action upon the assignable function of the electrical appliance (1) does not cause a user input to appear expressing rejection, in which
- the speech recognizer (4) in addition to a speech recognition result produces each time at least one alternative speech recognition result,
- training or the adaptation of the speech recognizer (4) is carried out on the basis of the speech recognition result associated with the latest speech input if the action upon the function of the electrical appliance (1) assignable to the speech recognition result does not lead to a user input expressing a rejection of the speech recognition result and,
- for the case where
- the speech recognition result corresponds to an alternative speech recognition result of the penultimate speech input and
- a user input has taken place expressing a rejection of the penultimate speech recognition result,
a further training or a further adaptation of the speech recognizer takes place in which it is assumed that the latest and penultimate speech input represent the same word or the same word sequence.

4. A method as claimed in any one of the claims 1 to 3, **characterized in that** the training or the adaptation of the speech recognizer (4) takes place if the performance of the function of the electrical appliance (1) is not interrupted by a user input.

5. A method as claimed in any one of the claims 1 to 3, **characterized in that** an acoustic or visual reproduction of a speech recognition result is provided.

6. A method as claimed in any one of the claims 1 to 3, **characterized in that** the electrical appliance (1) is a mobile telephone.

7. A method as claimed in claim 6, **characterized in that** a dialing process is triggered by means of a speech input.

8. An electrical appliance(1) including a speech recognizer (4) which is used to act upon functions of the electrical appliance, in which the electrical appliance (1) and the speech recognizer (4) are arranged for training or for adapting the speech recognizer (4) so that
- means for receiving a speech input made are provided;
- the speech recognizer (4) is provided to produce a speech recognition result from processing the speech input;
- in case the speech recognition result of a function of the electrical appliance (1) is assignable, means for acting on the assignable function of the electrical appliance (1) are provided;
- the speech recognizer (4) is provided for training or for adaptation on the basis of the speech recognition result associated with the speech input made, if the acting on the assignable function of the electrical appliance (1) does not cause a user input to appear expressing a rejection,
in which for the case where after a speech input a user input is made expressing a rejection of a speech recognition result and, furthermore, connected to this, a user input is made by means of another input method, there is provided that, reckoning with the input by means of the other input method, a reliability grade for the result of the speech recognition is determined and the training or the adaptation of the speech recognizer (4) is carried out while it is assumed that the speech input and the user input performed via the other input method represent the same word sequence.

9. An electrical appliance (1) with a speech recognizer (4) which is used to act upon functions of the electrical appliance, in which the electrical appliance (1) and the speech recognizer (4) are designed for the training or the adaptation of the speech recognizer (4) in such a way that:
- means for receiving a speech input made are provided;
- the speech recognizer (4) is provided to produce a speech recognition result from processing the speech input;
- in case the speech recognition result of a function of the electrical appliance (1) is assignable, means for acting on the assignable function of the electrical appliance (1) are provided;
- the speech recognizer (4) is provided for training or for adaptation on the basis of the speech recognition result associated with the speech input made, if the acting on the assignable function of the electrical appliance (1) does not cause a user input to appear expressing a rejection,
in which for the case where the user does not express his rejection, a first reliability grade is determined for a speech recognition result of the speech recognizer (4),
the training or the adaptation of the speech recognizer (4) is carried out on the basis of the speech recognition result that corresponds to the speech input made, if the first reliability grade of the speech recognition result is found to be in a predefined first desired range,
and for the case where the first reliability grade is not found in the first desired range and, furthermore, the next user input is made by means of another input method, there is provided that, reckoning with the input by means of the other input method, a second reliability grade for the result of the speech recognition is determined and the training or the adaptation is carried out based on the result of the speech recognition reckoning with the other speech input made via the other input method if the second reliability grade is found to be in a predefined second desired range.

10. An electrical appliance (1) with a speech recognizer (4) which is used to act upon functions of the electrical appliance, in which the electrical appliance (1) and the speech recognizer (4) are designed for the training or the adaptation of the speech recognizer (4) in such a way that:
- means for receiving a speech input made are provided;
- the speech recognizer (4) is provided to produce a speech recognition result from processing the speech input;
- in case the speech recognition result of a function of the electrical appliance (1) is assignable, means for acting on the assignable function of the electrical appliance (1) are provided;
- the speech recognizer (4) is provided for training or for adaptation on the basis of the speech recognition result associated with the speech input made, if the acting on the assignable function of the electrical appliance (1) does not cause a user input to appear expressing a rejection, in which
- the speech recognizer (4) produces, in addition to a recognition result, at least one alternative speech recognition result,
- the training or the adaptation of the speech recognizer (4) is carried out on the basis of the speech recognition result associated with the latest speech input made, if the acting on the function of the electrical appliance (1) assignable to the recongition result does not cause a user input to appear expressing rejection of the speech recognition result, and
- for the case where
- the speech recognition result corresponds to an alternative speech recognition result of the penultimate speech input and
- a user input has taken place expressing a rejection of the penultimate speech recognition result,
a further training or a further adaptation of the speech recognizer takes place in which it is assumed that the latest and penultimate speech input represent the same word or the same word sequence.

11. An electrical appliance as claimed in claims 8 to 10, **characterized in that** the electrical appliance is a mobile telephone terminal (1).

## Revendications

1. Procédé d'entraînement ou d'adaptation d'un dispositif de reconnaissance de la parole (4) qui sert à agir sur les fonctions d'un appareil électrique (1) et prévoit les étapes suivantes :
- exécution d'une introduction de parole ;
- traitement de l'introduction de parole à l'aide du dispositif de reconnaissance de la parole (4) pour la production d'un résultat de reconnaissance de la parole ;
- si le résultat de la reconnaissance de la parole peut être attribué à une fonction de l'appareil électrique (1), action sur la fonction attribuable de l'appareil électrique (1) ;
- entraînement ou adaptation du dispositif de reconnaissance de la parole (4) sur la base du résultat de reconnaissance de la parole correspondant à l'entrée de parole exécutée, si l'action sur la fonction attribuable de l'appareil électrique (1) ne provoque pas une entrée de l'utilisateur exprimant un refus,
auquel cas, si l'utilisateur n'exprime pas son refus,
- une première mesure de fiabilité est déterminée pour un résultat de reconnaissance de la parole du dispositif de reconnaissance de la parole (4),
- l'entraînement ou l'adaptation du dispositif de reconnaissance de la parole (4) sont effectués sur la base du résultat de reconnaissance de la parole correspondant à l'entrée de parole exécutée lorsque la première mesure de fiabilité du résultat de reconnaissance de la parole se situe dans une première zone de consigne préalablement déterminée,
- et, dans le cas où la première mesure de fiabilité ne se situe pas dans la première zone de consigne et, par ailleurs, qu'une entrée suivante de l'utilisateur est effectuée à l'aide d'une autre modalité d'introduction, il est prévu, en prenant en considération l'introduction à l'aide de l'autre modalité d'introduction, de déterminer une deuxième mesure de fiabilité pour le résultat de la reconnaissance de la parole et d'effectuer l'entraînement ou l'adaptation sur la base du résultat de reconnaissance de la parole en prenant en considération l'introduction de l'utilisateur effectuée à l'aide à de l'autre modalité d'introduction lorsque la deuxième mesure de fiabilité se situe dans une deuxième zone de consigne préalablement déterminée.

2. Procédé d'entraînement ou d'adaptation d'un dispositif de reconnaissance de la parole (4) qui sert à agir sur les fonctions d'un appareil électrique (1) et prévoit les étapes suivantes :
- exécution d'une introduction de parole ;
- traitement de l'introduction de parole à l'aide du dispositif de reconnaissance de la parole (4) pour la production d'un résultat de reconnaissance de la parole ;
- si le résultat de la reconnaissance de la parole peut être attribué à une fonction de l'appareil électrique (1), action sur la fonction attribuable de l'appareil électrique (1) ;
- entraînement ou adaptation du dispositif de reconnaissance de la parole (4) sur la base du résultat de reconnaissance de la parole correspondant à l'entrée de parole exécutée, si l'action sur la fonction attribuable de l'appareil électrique (1) ne provoque pas une entrée de l'utilisateur exprimant un refus,
auquel cas, si, à la suite d'une introduction de parole, une introduction de l'utilisateur exprimant un refus d'un résultat de reconnaissance de la parole intervient et est suivie d'une introduction de l'utilisateur à l'aide d'une autre modalité d'introduction, il est prévu que, en prenant en considération l'introduction à l'aide de l'autre modalité d'introduction, de déterminer une mesure de fiabilité pour le résultat de reconnaissance de la parole et d'effectuer l'entraînement ou l'adaptation du dispositif de reconnaissance de la parole, en supposant que l'introduction de la parole et l'introduction de l'utilisateur à l'aide de l'autre modalité d'introduction représentent le même mot ou la même séquence de mots.

3. Procédé d'entraînement ou d'adaptation d'un dispositif de reconnaissance de la parole (4) qui sert à agir sur les fonctions d'un appareil électrique (1) et prévoit les étapes suivantes :
- exécution d'une introduction de parole ;
- traitement de l'introduction de parole à l'aide du dispositif de reconnaissance de la parole (4) pour la production d'un résultat de reconnaissance de la parole ;
- si le résultat de la reconnaissance de la parole peut être attribué à une fonction de l'appareil électrique (1), action sur la fonction attribuable de l'appareil électrique (1) ;
- entraînement ou adaptation du dispositif de reconnaissance de la parole (4) sur la base du résultat de reconnaissance de la parole correspondant à l'entrée de parole exécutée, si l'action sur la fonction attribuable de l'appareil électrique (1) ne provoque pas une entrée de l'utilisateur exprimant un refus, auquel cas,
- le dispositif de reconnaissance de la parole (4) délivre, en plus d'un résultat de reconnaissance de la parole, au moins une alternative du résultat de reconnaissance de la parole,
- l'entraînement ou l'adaptation du dispositif de reconnaissance de la parole (4) sont effectués sur la base du résultat de reconnaissance de la parole appartenant à la dernière introduction de parole si l'action sur la fonction de l'appareil électrique (1) attribuable au résultat de reconnaissance de la parole ne provoque pas une introduction de l'utilisateur exprimant un refus du résultat de reconnaissance de la parole et
- dans le cas où
- le résultat de la reconnaissance de la parole correspond à une alternative du résultat de reconnaissance de la parole par rapport à l'avant-dernière introduction de parole et
- une introduction de l'utilisateur exprimant un refus de l'avant-dernier résultat de reconnaissance de la parole est effectuée,
il se produit un entraînement ou une adaptation supplémentaires du dispositif de reconnaissance de la parole en supposant que les dernière et avant-dernière introductions de parole représentent le même mot ou la même séquence de mots.

4. Procédé selon l'une des revendications 1 à 3,
**caractérisé en ce**
**que** l'entraînement ou l'adaptation du dispositif de reconnaissance de la parole (4) sont effectués lorsque l'exécution de la fonction de l'appareil électrique (1) n'est pas interrompue par une introduction de l'utilisateur.

5. Procédé selon l'une des revendications 1 à 3,
**caractérisé en ce**
**qu'**une reproduction acoustique ou visuelle d'un résultat de reconnaissance de la parole est prévue.

6. Procédé selon l'une des revendications 1 à 3,
**caractérisé en ce**
**que** l'appareil électrique (1) est un radiotéléphone mobile.

7. Procédé selon la revendication 6,
**caractérisé en ce**
**qu'**une procédure de sélection est déclenchée à l'aide d'une introduction de la parole.

8. Appareil électrique (1) avec un dispositif de reconnaissance de la parole (4) qui sert à agir sur les fonctions de l'appareil électrique, l'appareil électrique (1) et le dispositif de reconnaissance de la parole (4) étant conçus pour l'entraînement ou pour l'adaptation du dispositif de reconnaissance de la parole (4) de telle sorte que :
- des moyens sont prévus pour la réception d'introduction de parole exécutée ;
- le dispositif de reconnaissance de la parole (4) est prévu par traitement de l'introduction de parole pour la production d'un résultat de reconnaissance de la parole ;
- si le résultat de la reconnaissance de la parole peut être attribué à une fonction de l'appareil électrique (1), des moyens d'action sur la fonction attribuable de l'appareil électrique (1) sont prévus ;
- le dispositif de reconnaissance de la parole (4) est prévu pour l'entraînement ou la l'adaptation sur la base du résultat de reconnaissance de la parole correspondant à l'entrée de parole, si l'action sur la fonction attribuable de l'appareil électrique (1) ne provoque pas une entrée de l'utilisateur exprimant un refus,
auquel cas, si, à la suite d'une introduction de parole, une introduction de l'utilisateur exprimant un refus d'un résultat de reconnaissance de la parole intervient et est suivie d'une introduction de l'utilisateur à l'aide d'une autre modalité d'introduction, il est prévu que, en prenant en considération l'introduction à l'aide de l'autre modalité d'introduction, de déterminer une mesure de fiabilité pour le résultat de reconnaissance de la parole et d'effectuer l'entraînement ou l'adaptation du dispositif de reconnaissance de la parole (4), en supposant que l'introduction de la parole et l'introduction de l'utilisateur à l'aide de l'autre modalité d'introduction représentent le même mot ou la même séquence de mots.

9. Appareil électrique (1) avec un dispositif de reconnaissance de la parole (4) qui sert à agir sur les fonctions de l'appareil électrique, l'appareil électrique (1) et le dispositif de reconnaissance de la parole (4) étant conçus pour l'entraînement ou pour l'adaptation du dispositif de reconnaissance de la parole (4) de telle sorte que :
- des moyens sont prévus pour la réception d'introduction de parole exécutée ;
- le dispositif de reconnaissance de la parole (4) est prévu par traitement de l'introduction de parole pour la production d'un résultat de reconnaissance de la parole ;
- si le résultat de la reconnaissance de la parole peut être attribué à une fonction de l'appareil électrique (1), des moyens d'action sur la fonction attribuable de l'appareil électrique (1) sont prévus ;
- le dispositif de reconnaissance de la parole (4) est prévu pour l'entraînement ou l'adaptation sur la base du résultat de reconnaissance de la parole correspondant à l'entrée de parole, si l'action sur la fonction attribuable de l'appareil électrique (1) ne provoque pas une entrée de l'utilisateur exprimant un refus, auquel cas, si l'utilisateur n'exprime pas son refus,
- une première mesure de fiabilité est déterminée pour un résultat de reconnaissance de la parole du dispositif de reconnaissance de la parole (4),
- l'entraînement ou l'adaptation du dispositif de reconnaissance de la parole (4) sont effectués sur la base du résultat de reconnaissance de la parole correspondant à l'entrée de parole exécutée lorsque la première mesure de fiabilité du résultat de reconnaissance de la parole se situe dans une première zone de consigne préalablement déterminée,
- et, dans le cas où la première mesure de fiabilité ne se situe pas dans la première zone de consigne et, par ailleurs, qu'une entrée suivante de l'utilisateur est effectuée à l'aide d'une autre modalité d'introduction, il est prévu, en prenant en considération l'introduction à l'aide de l'autre modalité d'introduction, de déterminer une deuxième mesure de fiabilité pour le résultat de la reconnaissance de la parole et d'effectuer l'entraînement ou l'adaptation sur la base du résultat de reconnaissance de la parole en prenant en considération l'introduction de l'utilisateur effectuée à l'aide à de l'autre modalité d'introduction lorsque la deuxième mesure de fiabilité se situe dans une deuxième zone de consigne préalablement déterminée.

10. Appareil électrique (1) avec un dispositif de reconnaissance de la parole (4) qui sert à agir sur les fonctions de l'appareil électrique, l'appareil électrique (1) et le dispositif de reconnaissance de la parole (4) étant conçus pour l'entraînement ou pour l'adaptation du dispositif de reconnaissance de la parole (4) de telle sorte que :
- des moyens sont prévus pour la réception d'introduction de parole exécutée ;
- le dispositif de reconnaissance de la parole (4) est prévu par traitement de l'introduction de parole pour la production d'un résultat de reconnaissance de la parole ;
- si le résultat de la reconnaissance de la parole peut être attribué à une fonction de l'appareil électrique (1), des moyens d'action sur la fonction attribuable de l'appareil électrique (1) sont prévus ;
- le dispositif de reconnaissance de la parole (4) est prévu pour l'entraînement ou la l'adaptation sur la base du résultat de reconnaissance de la parole correspondant à l'entrée de parole, si l'action sur la fonction attribuable de l'appareil électrique (1) ne provoque pas une entrée de l'utilisateur exprimant un refus, auquel cas,
- le dispositif de reconnaissance de la parole (4) délivre, en plus d'un résultat de reconnaissance de la parole, au moins une alternative du résultat de reconnaissance de la parole,
- l'entraînement ou l'adaptation du dispositif de reconnaissance de la parole (4) sont effectués sur la base du résultat de reconnaissance de la parole appartenant à la dernière introduction de parole si l'action sur la fonction de l'appareil électrique (1) attribuable au résultat de reconnaissance de la parole ne provoque pas une introduction de l'utilisateur exprimant un refus du résultat de reconnaissance de la parole et
- dans le cas où
- le résultat de la reconnaissance de la parole correspond à une alternative du résultat de reconnaissance de la parole par rapport à l'avant-dernière introduction de parole et
- une introduction de l'utilisateur exprimant un refus de l'avant-dernier résultat de reconnaissance de la parole est effectuée,
il se produit un entraînement ou une adaptation supplémentaires du dispositif de reconnaissance de la parole en supposant que les dernière et avant-dernière introductions de parole représentent le même mot ou la même séquence de mots.

11. Appareil électrique selon l'une des revendications 8 à 10,
**caractérisé en ce**
**que** l'appareil électrique est un terminal radiomobile (1).
